(19) Europäisches Patentamt
European Patent Office
Office européen des brevets

(11) **EP 4 208 701 B1**

(12) **EUROPÄISCHE PATENTSCHRIFT**

(45) Veröffentlichungstag und Bekanntmachung des Hinweises auf die Patenterteilung:
**15.10.2025 Patentblatt 2025/42**

(21) Anmeldenummer: **21770177.0**

(22) Anmeldetag: **27.08.2021**

(51) Internationale Patentklassifikation (IPC):
**G01L 3/24** (2006.01)

(52) Gemeinsame Patentklassifikation (CPC):
**G01L 3/242;** Y02E 10/72

(86) Internationale Anmeldenummer:
**PCT/EP2021/073808**

(87) Internationale Veröffentlichungsnummer:
**WO 2022/049008 (10.03.2022 Gazette 2022/10)**

(54) **VERFAHREN UND VORRICHTUNG ZUM ERMITTELN EINER EFFIZIENZ UND/ODER ZUM KALIBRIEREN EINES DREHMOMENTS EINES ROTIERENDEN ANTRIEBSSTRANGS, INSBESONDERE EINER WINDENERGIEANLAGE**

METHOD AND DEVICE FOR DETERMINING AN EFFICIENCY AND/OR FOR CALIBRATING A TORQUE OF A ROTATING DRIVE TRAIN, IN PARTICULAR OF A WIND ENERGY INSTALLATION

PROCÉDÉ ET DISPOSITIF DE DÉTERMINATION D'UN RENDEMENT ET/OU DE CALIBRAGE D'UN COUPLE D'UNE CHAÎNE CINÉMATIQUE ROTATIVE, NOTAMMENT D'UNE INSTALLATION ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.09.2020 DE 102020211141**

(43) Veröffentlichungstag der Anmeldung:
**12.07.2023 Patentblatt 2023/28**

(73) Patentinhaber: **Fraunhofer-Gesellschaft zur Förderung
der angewandten Forschung e.V.
80686 München (DE)**

(72) Erfinder:
• **ZHANG, Hongkun
27572 Bremerhaven (DE)**
• **RUHLE, Andreas
27572 Bremerhaven (DE)**
• **FEJA, Paul
27572 Bremerhaven (DE)**

(74) Vertreter: **Pfenning, Meinig & Partner mbB
Patent- und Rechtsanwälte
Joachimsthaler Straße 10-12
10719 Berlin (DE)**

(56) Entgegenhaltungen:
WO-A1-2019/170539     CN-U- 206 876 320
CN-U- 207 396 040     DE-A1- 102010 047 413
DE-B3- 102018 203 525

**Beschreibung**

Die vorliegende Anmeldung betrifft ein Verfahren zum Ermitteln einer Effizienz und/oder zum Kalibrieren eines Drehmoments eines rotierenden Antriebstrangs, insbesondere eines Antriebsstrangs oder eines Teils eines Antriebsstrangs einer Windenergieanlage. Das Verfahren zum Ermitteln einer Effizienz und/oder zur Kalibrierung eines Drehmoments eines Antriebstrangs, insbesondere eines Antriebstrangs einer Windenergieanlage, eignet sich insbesondere zur Durchführung an einem Prüfstand und umfasst zwei Versuche. Der Antriebstrang weist ein erstes Ende mit einem ersten Wellenabschnitt und ein zweites Ende mit einem zweiten Wellenabschnitt auf, zwischen denen ein mechanisches Übertragungselement, insbesondere ein Getriebe, angeordnet ist. In einem ersten Versuch wird ein erstes Ende des Antriebstrangs angetrieben. In einem zweiten Versuch wird ein zweites Ende des Antriebstrangs angetrieben aus den im ersten Versuch und im zweiten Versuch erfassten Messgrößen wird eine Effizienz und/oder Kalibrierparameter bestimmt.

Ein solches Verfahren ist grundsätzlich bereits aus dem deutschen Patent DE 10 2018 203 525 B3 bekannt.

Die vorliegende Anmeldung betrifft demgemäß ein Verfahren zum Ermitteln einer Effizienz und/oder zum Kalibrieren eines Drehmoments eines Antriebsstrangs oder eines Teils eines Antriebsstranges, insbesondere eines Antriebsstrangs einer Windenergieanlage, insbesondere an einem Prüfstand.

Der bekannte Stand der Technik hierzu kann wie folgt umrissen werden:
DE 10 2010 049 407 A1 beschreibt einen Prüfstand für eine Windkraftanlage und ein Verfahren zu dessen Prüfung, wobei der Prüfstand einerseits einen Motorantrieb und andererseits ein Getriebe und einen Generator umfasst. Das Getriebe ist die zu testende Komponente des Prüfstands und der Motorantrieb zum Beaufschlagen des Getriebes ist mit einem eine Windkraft simulierenden Drehmoment versehen.

In dem US-Patent 1 662 705 A ist eine Vorrichtung zum Testen von Motorfahrzeug-Übertragungsmechanismen offenbart, die auch für andere mechanische Kraftübertragungsmechanismen anwendbar ist.

CN 206 876 320 U beschreibt eine Prüfbank für Effizienztester eines Getriebes eines Fahrzeugs.

Auch in der DE 10 2010 047 413 A1 und der DE 103 26 212 A1 sind Verfahren und Vorrichtungen zum Ermitteln einer Verlustleistung beziehungsweise eines Wirkungsgrades eines Fahrzeuggetriebes beziehungsweise eines ein Drehmoment übertragenden Prüflings offenbart.

Aus dem eingangs erwähnten deutschen Patent DE 10 2018 203 525 B3 ist bereits ein Verfahren zum Ermitteln einer Effizienz und/oder zum Kalibrieren eines Drehmoments eines rotierenden Antriebstrangs bekannt, bei dem jeweils elektrische Leistungen von Antriebs- und/oder Abtriebseinheiten gemessen werden.

Die Effizienz sowie das Drehmoment eines Antriebsstrangs einer Windenergieanlage ist für Hersteller und Betreiber von Windenergieanlagen sowohl eine wichtige Kennziffer bei der Entwicklung als auch ein Indikator für die technische Reife einer Windenergieanlage. Aus diesem Grund gibt es einen Bedarf an einer hinreichend genauen Effizienzmessung bei verschiedenen Lastsituationen und unterschiedlichen Umgebungsbedingungen, insbesondere bei hohen Drehmomenten. Eine möglichst genaue Effizienzbestimmung bei hohen Drehmomenten ermöglicht somit eine bessere Kenntnis der Windenergieanlage. Diese Kenntnis der Effizienzkennlinie ist Grundlage für eine zielgerichtete Weiterentwicklung und einen optimierten Betrieb einer Windenergieanlage.

Die Genauigkeit von Effizienzmessungen nach dem Stand der Technik ist dabei unter anderem von der Genauigkeit einer Drehmomentmessung am Antriebsstrang der Windenergieanlage abhängig. In modernen Windenergieanlagen beträgt ein Drehmoment der Hauptwelle des Antriebsstrangs oft mehrere Meganewtonmeter (MNm). Kalibriereinrichtungen des Standes der Technik ermöglichen jedoch eine Kalibrierung nur bis zu einem Drehmoment von 1,1 MNm. Da es zurzeit keine Kalibriermöglichkeit für höhere Drehmomente gibt, ist eine hinreichend genaue Messung des mechanischen Drehmoments an der Hauptwelle einer Windenergieanlage mit den bekannten Verfahren nicht möglich.

Es ist unter anderem aus diesem Grund auch bereits bekannt, die Effizienz von WEA-Getrieben durch sog. "back-to-back"-Tests zu bestimmen, bei welchen zwei Getriebe an der langsam drehenden Welle miteinander gekoppelt sind. Präzise Drehmomentaufnehmer werden aufseiten der schnell drehenden Welle installiert, wo das Drehmoment deutlich geringer ist, um dort die Drehmomentmessung durchzuführen. Die Eingangs- und Ausgangsleistungen werden durch Drehmoment- und Drehzahlmessungen bestimmt - damit wird die Effizienz der zwei Getriebe umfassenden Baugruppe bestimmt, welche auf die einzelnen Getriebe aufgeteilt werden kann. Ein wesentlicher Nachteil dieser Methode besteht darin, dass die Rahmbedingungen im Test nicht der Situation im WEA-Antriebsstrang entsprechen. Vor allem sind die parasitären Lasten, welche bei einer WEA stark Präsenz zeigen, bei dem Test nicht appliziert, bzw. sehr schwierig auf beide Getriebe gleichmäßig zu applizieren.

Aufgabe der vorliegenden Erfindung ist es vor dem Hintergrund des Standes der Technik, ein Verfahren und eine Vorrichtung vorzuschlagen, mit dem/der eine Effizienz einer Windenergieanlage mit dem Einsatz begrenzter Mittel möglichst genau bestimmt werden kann. Des Weiteren kann es eine Aufgabe der Erfindung sein, ein möglichst wenig aufwändiges Verfahren zum Kalibrieren eines Hauptwellen-Drehmoments einer Windenergieanlage vorzuschlagen.

Gelöst werden diese Aufgaben durch ein Verfahren gemäß den Merkmalen des Anspruchs 1 und/oder des Anspruchs 2. Vorteilhafte Weiterbildungen ergeben sich mit den Merkmalen der abhängigen Ansprüche und der Ausführungsbeispiele.

Die Erfindung bezieht sich somit unter anderem auf ein Verfahren zum Ermitteln einer Effizienz eines Antriebsstrangs, oder eines Teils eines Antriebsstrangs, einer Windenergieanlage, wobei der Antriebstrang ein erstes Ende mit einem mittels einer ersten Antriebseinrichtung in Form eines Elektromotors antreibbaren ersten Wellenabschnitt und ein zweites Ende mit einem mittels einer zweiten Antriebseinrichtung in Form eines Elektromotors antreibbaren zweiten Wellenabschnitt aufweist, zwischen denen ein mechanisches Übertragungselement, insbesondere ein Getriebe, angeordnet ist, wobei die Elektromotoren zumindest teilweise auch im Generatorbetrieb arbeiten können, wobei in einem ersten Versuch das erste Ende des Antriebstrangs angetrieben wird und das Drehmoment unmittelbar durch einen Sensor sowie eine Winkelposition oder eine Drehgeschwindigkeit am ersten Ende des Antriebsstrangs sowie am zweiten Ende des Antriebstrangs das Drehmoment unmittelbar durch einen Sensor sowie eine Winkelposition oder eine Drehgeschwindigkeit erfasst werden, und wobei in einem zweiten Versuch das zweite Ende des Antriebstrangs angetrieben wird und das Drehmoment unmittelbar durch einen Sensor sowie eine Winkelposition oder eine Drehgeschwindigkeit am zweiten Ende des Antriebstrangs sowie am ersten Ende des Antriebstrangs das Drehmoment unmittelbar durch einen Sensor sowie eine Winkelposition oder eine Drehgeschwindigkeit erfasst werden und aus den im ersten Versuch und im zweiten Versuch aufgrund der Drehmomente bestimmten mechanischen Leistungen eine Effizienz unter Berücksichtigung mindestens einer aufgrund von Experimenten oder Erfahrung oder Analyse vorbestimmten Annahme ermittelt wird. Die Erfindung bezieht sich weiter auch auf ein Verfahren zur Kalibrierung einer Drehmomentmessung eines Antriebstrangs oder eines Teils eines Antriebstrangs einer Windenergieanlage an einem Prüfstand, wobei der An-triebsstrang ein erstes Ende mit einem mittels einer ersten, als Elektromotor ausgebildeten Antriebseinrichtung antreibbaren ersten Wellenabschnitt und ein zweites Ende mit einem mittels einer zweiten, als Elektromotor ausgebildeten Antriebseinrichtung antreibbaren zweiten Wellenabschnitt aufweist, zwischen denen ein mechanisches Übertragungselement, insbesondere ein Getriebe, angeordnet ist, wobei die Elektromotoren zumindest teilweise auch im Generatorbetrieb arbeiten können, wobei in einem ersten Versuch das erste Ende des Antriebstrangs angetrieben wird und das Drehmoment unmittelbar durch einen Sensor sowie eine Winkelposition oder eine Drehgeschwindigkeit am ersten Ende des Antriebstrangs sowie am zweiten Ende des Antriebstrangs das Drehmoment unmittelbar durch einen Sensor sowie eine Winkelposition oder eine Drehgeschwindigkeit erfasst werden, und wobei in einem zweiten Versuch das zweite Ende des Antriebstrangs angetrieben wird und das Drehmoment unmittelbar durch einen Sensor sowie eine Winkelposition oder eine Drehgeschwindigkeit am zweiten Ende des Antriebstrangs sowie das Drehmoment unmittelbar durch einen Sensor sowie eine Winkelposition oder eine Drehgeschwindigkeit am ersten Ende des Antriebstrangs erfasst werden und aus den im ersten Versuch und im zweiten Versuch unter Berücksichtigung der ebenfalls erfassten Drehzahlen bestimmten mechanischen Leistungen Kalibrierparameter a und b unter Berücksichtigung mindestens einer aufgrund von Experimenten oder Erfahrung oder Analyse vorbestimmten Annahme ermittelt werden, wobei der erste und der zweite Ver-such für zumindest zwei verschiedene Drehmomentstufen, von denen eine eine Null-Drehmomentstufe sein kann, durchgeführt werden.

Das Verfahren zum Ermitteln einer Effizienz und/oder zur Kalibrierung eines Drehmoments eines Antriebsstrangs eignet sich insbesondere zur Durchführung an einem Prüfstand und umfasst zwei Versuche. Der Antriebsstrang weist ein erstes Ende an einem mit einem Motor verbindbaren ersten Wellenabschnitt auf, sowie ein zweites Ende, wobei zwischen den Enden beispielsweise ein Getriebe angeordnet ist. Der Motor ist vorzugsweise ein Motor des Prüfstands. Der erste Wellenabschnitt kann insbesondere eine mit einem Rotor einer Windenergieanlage verbindbare Windenergieanlagenhauptwelle sein.

In einem ersten Versuch wird das erste Ende des Antriebsstrangs, beispielsweise mittels der ersten Antriebseinheit, angetrieben. Dabei werden das Drehmoment am ersten Wellenabschnitt am ersten Ende des Antriebsstrangs und das Drehmoment am zweiten Wellenabschnitt am zweiten Ende des Antriebsstrangs bestimmt. Die zweite Antriebseinheit am zweiten Ende des Antriebsstrangs kann in diesem Fall als Generator betrieben werden.

In einem zweiten Versuch wird das zweite, beispielsweise im Falle einer Windenergieanlage generatorseitige, Ende des Antriebsstrangs, beispielsweise mittels der zweiten Antriebseinheit, angetrieben und das auf das zweite Ende oder den zweiten Wellenabschnitt wirkende Drehmoment am zweiten Ende sowie das auf den ersten Wellenabschnitt wirkende Drehmoment am ersten Wellenabschnitt oder am ersten Ende des Antriebsstrangs bestimmt. Die erste Antriebseinheit am ersten Ende des Antriebsstranges kann in diesem Fall als Generator betrieben werden und die zweite Antriebseinheit kann durch den Generator der Windenergieanlage gebildet sein.

Aus den im ersten Versuch und im zweiten Versuch bestimmten Drehmomenten wird eine Effizienz, insbesondere unter Verwendung zumindest einer Annahme ermittelt, die in vorherigen Experimenten und Analysen vorher festgelegt wird. Eine Annahme kann beispielsweise darin bestehen, dass die Effizienz des ersten Versuchs gleich der Effizienz des zweiten Versuchs ist. Eine andere Annahme kann dahingehend getroffen werden, dass eine Verlustleistung des ersten Versuchs ein bestimmter Bruchteil der Gesamtverlustleistung beider Versuche ist, z.B. die Hälfte.

Zur Ermittlung der Leistungen beim ersten und zweiten Versuch (Test A und Test B) können zusätzlich zu jeweiligen Drehmomenten jeweils an einem oder beiden Enden des Antriebsstrangs oder an einer Position des Antriebsstrangs zusätzlich Drehzahlen oder Rotationsgeschwindigkeiten bzw. zeitaufgelöst Winkelpositionen gemessen werden. Bei der laufenden Messung von Winkelpositionen eines Wellenabschnitts kann auch bei variierenden Drehgeschwindigkeiten das Drehmoment über die Zeit integriert werden, um die Messung in dynamischen Situationen durchzuführen.

Bei dem vorgeschlagenen Verfahren wird im ersten Versuch ein erstes Drehmoment vom ersten Ende des Antriebsstranges her und im zweiten Versuch ein zweites Drehmoment von seinem zweiten Ende aufgebracht. Die Drehmomente können bei beiden Versuchen das gleiche Vorzeichen und die Rotation des Antriebsstrangs jeweils entgegengesetzte Drehrichtung aufweisen. Dies kann den Vorteil haben, dass in der Effizienzbestimmung eine Messunsicherheit der vom Hauptwellen-Drehmoment abhängigen Größe verringert wird, da sich die Messunsicherheiten des ersten und zweiten Versuchs subtrahieren können.

Die auf das erste und das zweite Ende oder auf den ersten und zweiten Wellenabschnitt wirkenden Drehmomente können im ersten und zweiten Versuch jedoch auch entgegengesetzt gerichtet sein und der Antriebsstrang oder der erste und zweite Wellenabschnitt oder das erste und zweite Ende des Antriebsstranges im ersten und zweiten Versuch jeweils die gleiche Drehrichtung aufweisen mit dem Ergebnis, dass die Richtung der Drehmomente sich zwischen dem ersten und zweiten Versuch unterscheidet. Dadurch kann insbesondere beim Kalibrieren der Drehmomentmessung wegen der unterschiedlichen Vorzeichen der aufgebrachten Drehmomente in beiden Versuchen insgesamt der Drehmoment- Messbereich stark vergrößert und damit die Kalibrierung verbessert werden.

Da der Antrieb im ersten und zweiten Versuch von verschiedenen Enden des Antriebsstrangs her erfolgt, nämlich im ersten Versuch am ersten Ende, und im zweiten Versuch am zweiten Ende, der Antriebsstrang also beispielsweise mittels eines Motors am ersten Ende und mittels des Generators am zweiten Ende des Antriebsstranges angetrieben werden kann, ist eine Transmissionsrichtung der übertragenen Leistung und Energie zwischen dem ersten und dem zweiten Versuch umgekehrt.

Zum Ermitteln der wirkenden Drehmomente kann das jeweils auf einen Wellenabschnitt oder ein Ende des Antriebsstrangs wirkende Drehmoment mittels eines Sensors, vorzugsweise mit einem Dehnungsmessstreifen oder beispielsweise einem Piezo- Sensor oder einem optischen, dehnungssensitiven Sensor, gemessen werden. Jedenfalls kann an jedem Ende des Wellenstrangs das Drehmoment unmittelbar durch einen Sensor an einem ein Drehmoment übertragenden Element gemessen werden, der eine mechanische Messgröße erfasst. Ferner kann eine Winkelposition eines Wellenabschnitts und/oder eine Drehgeschwindigkeit, insbesondere mit einem Inkrementalgeber, gemessen werden. So kann auf einfache Art und Weise ein Drehmoment und eine Leistung bestimmt werden. Vorzugsweise liegt eine Messstelle zum Messen des Drehmoments möglichst nah an einer Messstelle zum Messen der Winkelposition bzw. der Drehgeschwindigkeit. Derart kann erreicht werden, dass möglichst wenige Schwingungen zwischen den Messstellen vorkommen, die Messergebnisse verfälschen können.

Es kann bei den beschriebenen Verfahren vorgesehen sein, dass zur Bestimmung der Effizienz bzw. zur Kalibrierung einer Drehmomentmessung angenommen wird, dass die Effizienz des ersten Versuchs gleich der Effizienz des zweiten Versuchs ist.

Eine mögliche Realisierung der Erfindung kann, wie oben erwähnt, auch vorsehen, dass eine Annahme zur Bestimmung der Effizienz und/oder zur Kalibrierung einer Drehmomentmessung die Annahme ist, dass eine Verlustleistung der einen der beiden Versuche ein bestimmter Bruchteil der Gesamtverlustleistung der beiden Versuche ist.

Es kann außerdem vorgesehen sein, dass das Drehmoment mittels eines Sensors, vorzugsweise mit einem Dehnungsmessstreifen, gemessen wird und/oder dass eine Winkelposition $\Theta$ des Wellenabschnitts oder seine Rotationsgeschwindigkeit $\omega$ mit einem Inkrementalgeber, gemessen wird.

Eine Form der Implementierung der Erfindung kann außerdem vorsehen, dass jeweils im ersten und/oder zweiten Versuch auf der Antriebsseite und/oder der Abtriebsseite ergänzend zu dem Drehmoment sowie einer Winkelposition oder einer Drehgeschwindigkeit eine elektrische Leistung einer als Motor oder Generator betriebenen Antriebseinheit gemessen wird, wobei insbesondere zur Bestimmung der elektrischen Leistung an einem der Antriebe mindestens eine Spannung und mindestens ein Strom gemessen werden.

Durch eine solche Messung können die mechanischen Messungen ergänzt oder geeicht werden oder umgekehrt elektrische Messungen durch mechanische Zusatzmessungen ergänzt werden, um eine größere Genauigkeit oder eine höhere Zuverlässigkeit der Messung zu erreichen.

Es kann zudem vorgesehen sein, dass für den ersten Versuch und für den zweiten Versuch jeweils eine Versuchs-Verlustleistung ermittelt wird, diese beiden ermittelten Versuchs-Verlustleistungen zu einer Gesamtverlustleistung addiert werden und die Effizienz unter Verwendung der Gesamtverlustleistung berechnet wird.

Zudem kann bei den beschriebenen Verfahren vorgesehen sein, dass zur Bestimmung des Drehmoments das Messsignal eines Sensors ausgewertet wird, der an dem jeweiligen Wellenabschnitt oder an einem Wellenadapter zwischen dem jeweiligen Wellenabschnitt und einem benachbarten Wellenabschnitt angeordnet ist.

Es kann außerdem vorgesehen sein, dass während des ersten Versuchs verschiedene Arbeitspunkte des Antriebstrangs angesteuert werden und während des zweitens Versuchs verschiedene Arbeitspunkte des Antriebstrangs, angesteuert werden, wobei die angesteuerten Arbeitspunkte im ersten und zweiten Versuch vorzugsweise die gleichen sind.

Die verschiedenen Arbeitspunkte unterscheiden sich typischerweise durch verschiedene Drehmoment- oder Leistungsniveaus bei den verschiedenen Messungen.

Eine weitere mögliche Implementierung der Erfindung kann vorsehen, dass in dem zweiten Versuch das zweite Ende des Antriebstrangs derart angetrieben wird, dass das auf den ersten Wellenabschnitt wirkende Drehmoment im zweiten Versuch gleich dem im ersten Versuch bestimmten, auf den ersten Wellenabschnitt wirkenden Drehmoment ist.

Damit ergeben sich für die Auswertung besonders günstige Verhältnisse, bei denen sich systematische Messfehler besonders gut neutralisieren.

Es kann auch vorgesehen sein, dass in dem zweiten Versuch das zweite Ende des Antriebstrangs derart angetrieben wird, dass das auf den zweiten Wellenabschnitt wirkende Drehmoment im zweiten Versuch gleich dem im ersten Versuch bestimmten, auf den zweiten Wellenabschnitt wirkenden Drehmoment ist.

Auch bei dieser Konstellation ergeben sich für die Auswertung besonders günstige Verhältnisse, bei denen sich systematische Messfehler besonders gut neutralisieren.

Zudem kann vorgesehen sein, dass der Drehsinn des ersten und zweiten Wellenabschnittes beim ersten und zweiten Versuch derselbe ist.

Damit ergeben sich, wie bereits oben erwähnt, unterschiedliche Richtungen der Drehmomente beim ersten und zweiten Versuch.

Es kann auch vorgesehen sein, dass unter Verwendung des auf den ersten Wellenabschnitt wirkenden Drehmoments und des auf den zweiten Wellenabschnitt wirkenden Drehmoments eine mechanische Leistung $P_{mech.right.A}$ und $P_{mech.right.B}$ in Abhängigkeit zweier Konstanten a und b jeweils für den ersten Versuch und für den zweiten Versuch für jeweils beide Seiten bestimmt werden und anhand $P_{mech.left.A}$- $P_{mech.right.A}$ = $k(P_{mech.right.B}$- $P_{mech.left.B})$ und $P_{mech.left.A}$+ $kP_{mech.left.B}$= $kP_{mech.right.B}$+ $P_{mech.right.A}$ wobei k ein Verhältnis zwischen den Verlusten (jeweils gegeben durch die Durchschnittsverlustleistung, in Form einer übertragenen Energie als Integral, dividiert durch die Versuchszeit) des ersten Versuchs

$$P^{int}_{mechA} = \text{Integral } (a * \varepsilon + b) \, d\Theta / t_A$$

und des zweiten Versuchs

$$P^{int}_{mechB} = \text{Integral } (a * \varepsilon + b) \, d\Theta / t_B$$

ist, die Kalibrierparameter a und b zum Bestimmen eines Drehmoments $T = a * \varepsilon + b$ ermittelt werden, wobei T das Drehmoment und $\varepsilon$ das auf den ersten Wellenabschnitt wirkende Drehmoment ist.

Die Erfindung kann dadurch implementiert werden, dass jede der Drehmomentstufen einer anderen Leistungsstufe des Antriebstrangs entspricht. Damit lässt sich ein Gleichungssystem zumindest näherungsweise lösen, um a und b zu bestimmen.

Es kann auch vorgesehen sein, dass, ausgehend von einer vorgegebenen Effizienz die Kalibrierparameter bestimmt werden, dann Effizienzen für zumindest zwei Leistungsstufen ermittelt werden und anschließend erneut die KalibrierParameter bestimmt werden und die letzten zwei Schritte solange wiederholt werden bis die Abweichung zwischen der letzten und der vorangehenden Bestimmung kleiner als ein vorbestimmter Wert ist.

Letztlich kann auch vorgesehen sein, dass die Kalibrierparameter unter Verwendung der Methode der kleinsten Quadrate bestimmt werden.

Im Folgenden wird die Erfindung anhand von Ausführungsbeispielen in Figuren einer Zeichnung gezeigt und nachfolgend erläutert.

Dabei zeigen:

Figur 1: In einem Diagramm den Verlauf der Energiewandlung im Normalbetrieb.

Figur 2: In einem weiteren Diagramm den Verlauf der Energiewandlung im Umkehrbetrieb (Der Generator der Windenergieanlage läuft im Motorbetrieb und der Motor des Prüfstands im Generatorbetrieb).

Figur 3: Ein Diagramm für ein Testszenario, bei welchem die mechanische Leistung an keinem der beiden Enden des Antriebsstranges bei beiden Versuchen gleich gehalten ist. Auf diese Weise ergibt sich eine relativ große Unsicherheit der Effizienzbestimmung.

Figur 4: Schematisch ein Testszenario, bei welchem die mechanische Leistung an der rechten/zweiten Seite des Getriebes beim ersten und zweiten Versuch/Test etwa gleich gehalten ist. Auf diese Weise kann die Unsicherheit der Effizienzbestimmung reduziert werden.

Figur 5: Ein Testszenario, bei welchem die mechanische Leistung an der linken Seite/am ersten Ende des Antriebsstranges mit einem Getriebe bei beiden Versuchen etwa gleich gehalten ist. Auf diese Weise kann die Unsicherheit der Effizienzbestimmung reduziert werden.

Figur 6: In einem Diagramm, einen Prüfstand für Test A, den ersten Versuch, bei dem ein Antriebsstrang mit Getriebe von der linken Seite von Motor I angetrieben wird, der Teil des Prüfstands sein kann.

Figur 7: In einem weiteren Diagramm Test B, den zweiten Versuch, bei dem ein Antriebsstrang mit Getriebe im Vergleich zur Figur 6 von der rechten Seite angetrieben wird. Die Drehrichtung ist im Vergleich zu Test A umgekehrt.

Figur 8: Ein Diagramm mit einem Testszenario, bei welchem die Leistungen auf der rechten Seite für beide Tests/Versuche etwa gleich gehalten sind,

Figur 9: In einem Diagramm einen weiteren ersten Versuch/Test A. Das Getriebe wird von der linken Seite angetrieben (wie Figur 6),

Figur 10: In einem weiteren Diagramm einen weiteren zweiten Versuch/Test B. Das Getriebe wird von der rechten Seite angetrieben. Drehrichtung unverändert im Vergleich zu Test A. Wegen der unveränderten Drehrichtung ist das Vorzeichen der Drehmomente gegenüber Test A umgekehrt.

Figur 11: In einem weiteren Diagramm die Kombination von Messwerten aus den in Figuren 9 und 10 dargestellten Konstellationen. Mit Vorzeichenänderung der Leistungen von Test B lässt sich die gesamte Verlustleistung bestimmen.

Figur 12: In einem weiteren Diagramm einen Test A. Normalbetrieb der Windenergieanlage (WEA) auf dem diese antreibenden Prüfstand.

Figur 13: In einem weiteren Diagramm einen Test B. Der Generator der WEA läuft als Motor und der Motor des Prüfstands als Generator. Die Drehrichtung bleibt gegenüber Test A (Figur 12) unverändert.

Figur 14: Hier ist dargestellt, dass die Differenz der Leistungen zwischen dem in Figur 12 dargestellten Test A und dem in Figur 13 dargestellten Test B als Basis für die Drehmomentkalibrierung eingesetzt werden kann.

Figur 15: In einem weiteren Diagramm einen ersten Versuch/ Test A. Betrieb eines Prüfstands mit einem Getriebe.

Figur 16: Ein weiteres Diagramm über einen zweiten Versuch/Test B (vgl. Figur 15). Die Drehrichtung bleibt unverändert gegenüber Test A aus Figur 15.

Figur 17: Hier ist dargestellt, dass die Differenz der Leistungen zwischen Test A und Test B aus den Figuren 15 und 16 als Basis für die Drehmomentkalibrierung genutzt werden kann.

Figur 18: Diagramm zu einem Test A/Versuch 1. Betrieb des Prüfstands mit antreibendem Motor, der den Antriebsstrang der WEA antreibt. Ein präziser Drehmomentaufnehmer ist zwischen Getriebe und Generator installiert.

Figur 19: Diagramm zu einem Test B. Im Vergleich zum Test A (Figur 18) findet ein umgekehrter Betrieb des Prüfstands und der WEA statt. Die Drehrichtung ist ebenfalls umgekehrt.

Figur 20: Eine Darstellung eines Diagramms der Leistungen aus den zwei in Figuren 18 und 19 dargestellten Versuchen, gemessen an Messstellen den beiden Enden des Antriebsstranges.

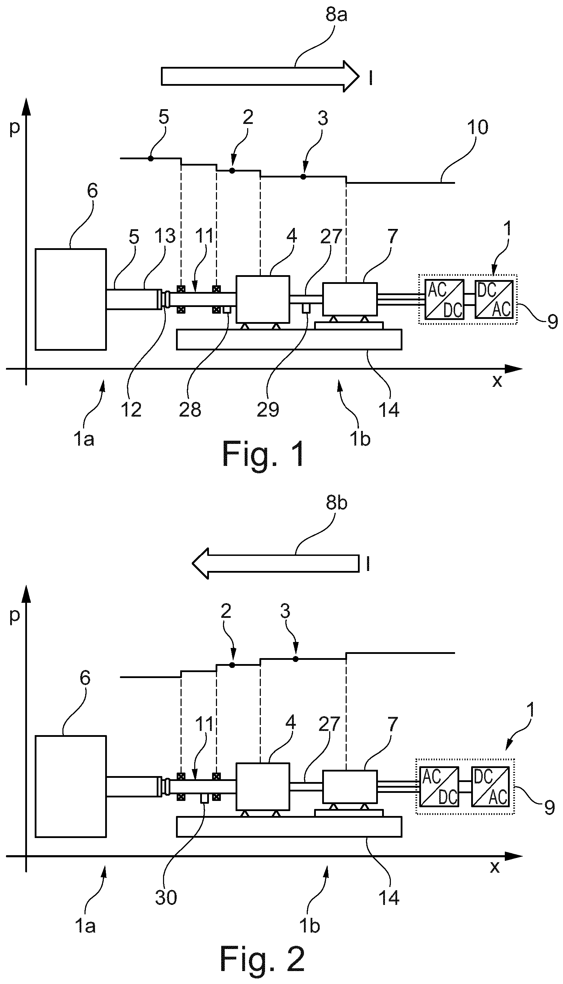

Im Folgenden dient ein Getriebe 4 als Beispiel für eine Teilkomponente des Antriebsstrangs 1. Vor und hinter dem Getriebe 4/der Komponente werden Drehmomentmessungen mithilfe von Drehmomentaufnehmern 28, 29 instrumentiert (Figur 1 und Figur 2, Punkte 2 und 3 links und rechts des Getriebes 4). Beide Messungen müssen nicht hochgenau sein. Außerdem wird mit einem Drehzahlsensor 30 die Drehzahl beispielsweise am Messpunkt 2, 3 oder 5 gemessen. Der Antriebsstrang kann z.B. auf einem Gondelprüfstand getestet werden.

In einem ersten Testlauf/Versuch, wie in Figur 1 dargestellt, wird der Antriebsstrang 1 an seinem ersten Ende 1a von einer Antriebseinheit in Form des Motors 6 des Prüfstands angetrieben und die zweite Antriebseinheit 7 am zweiten Ende 1b des Antriebsstrangs wird in ihrem bestimmungsgemäßen Generator-Mode betrieben. Die Richtung des Kraftflusses oder Energie/Leistungsflusses ist mit dem Pfeil 8a von links nach rechts bezeichnet, ein mit dem Generator verbundener Umrichter ist mit 9 bezeichnet. Die Linie 10 bezeichnet an den jeweiligen Stellen entlang des Antriebsstranges das Niveau des lokal wirkenden Drehmomentes und/oder der übertragenen Leistung. Mit 11 ist ein schematisch dargestellter Abschnitt des Antriebsstranges 1 bezeichnet, der die Hauptwelle der Windenergieanlage bildet. 12 bezeichnet einen Wellenadapter und 13 eine Antriebswelle des Prüfstands. Mit 14 ist ein Maschinenträger bezeichnet, auf dem die Komponenten des Prüfstands sowie der Prüfling montiert sein können. Auf der horizontalen Achse des Diagramms ist die Strecke x entlang des Antriebsstrangs aufgetragen, während auf der vertikalen Achse die entlang des Antriebsstrangs an den jeweiligen Punkten gemessenen Drehmomente (oder hiervon eindeutig abhängige Größen) oder proportional dazu die lokal übertragene Leistung P aufgetragen ist.

Funktionsgleiche Teile sind in allen folgenden Figuren mit denselben Bezugszeichen bezeichnet.

In einem zweiten Testlauf/Versuch treibt, wie in Figur 2 dargestellt, der Antriebsstrang 1 von seinem zweiten Ende 1b her den Motor des Prüfstands an, der Generator 7/die zweite Antriebseinheit des Antriebstrangs 1 läuft also im Motor -Betriebsmodus. Dabei dreht der Antriebstrang während des zweiten Testlaufs in entgegengesetzter Drehrichtung im Vergleich zum ersten Testlauf. Die Drehzahl soll dabei an allen Stellen des Antriebsstrangs der des ersten Testlaufs entsprechen. Die Richtung des Kraftflusses von rechts nach links ist durch den Pfeil 8b dargestellt.

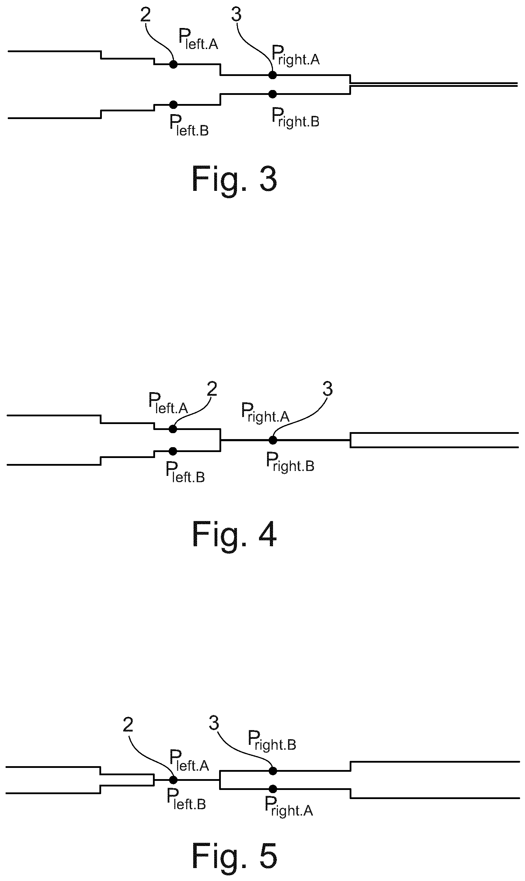

Vorzugsweise sollen die gemessenen mechanischen Leistungen der beiden Testläufe entweder an der linken Seite/ am Punkt 2 des Antriebsstrangs wie in Figur 5 dargestellt oder an der rechten Seite des Getriebes /am zweiten Ende 1b/zweiten Wellenabschnitt des Antriebsstranges 1, wie in Figur 4 dargestellt und mit dem Punkt 3 bezeichnet, betragsmäßig gleich sein. Die Antriebsmomente oder Leistungen der Antriebseinheiten 6, 7 werden hierzu geeignet gesteuert. Zudem sollen andere Zustände der Getriebe, z.B. die Temperatur, Zustände der Schmierung und Kühlungssysteme, auch bei beiden Versuchen möglichst gleich gehalten werden.

Die beiden beschriebenen Versuche werden im Folgenden als Test A (Versuch A, erster Versuch) und Test B (Versuch B, zweiter Versuch) bezeichnet. In der Figur 3 ist zum Vergleich in einem Diagramm die übertragene Leistung für beide Versuche für den Fall dargestellt, dass die Leistung und das Drehmoment an keinem der beiden Enden des Antriebsstranges für beide Versuche auf demselben Niveau gehalten wird.

Der Leistungsverlust des Getriebes in jedem einzelnen Test bestimmt sich zu:

$$P_{Loss.A} = P_{left.A} - P_{right.A}$$

$$P_{Loss.B} = P_{right.B} - P_{left.B}$$

Der gesamte Leistungsverlust in beiden Tests:

$$P_{Loss.total} = P_{left.A} - P_{left.B} + P_{right.B} - P_{right.A}$$

$$P_{left} = T_{left} \cdot \omega \qquad\qquad P_{right} = T_{right} \cdot \omega$$

Annahme: $P_{Loss.A} = k \cdot P_{Loss.B}$

Die Effizienz eines individuellen Tests wird bestimmt zu:

$$\eta_A = 1 - \frac{P_{Loss.A}}{P_{left.A}} = 1 - \frac{k}{k+1}\frac{P_{Loss.total}}{P_{left.A}}$$

$$\eta_B = 1 - \frac{P_{Loss.B}}{P_{right.B}} = 1 - \frac{1}{k+1}\frac{P_{Loss.total}}{P_{right.B}}$$

Die oben vorgestellte Methode kann beispielsweise mit dem Verfahren nach DE 10 2018 203 525 B3, das heißt mit zusätzlichen Messungen der elektrischen Leistung an einer oder beiden Antriebseinheiten, kombiniert werden.

Das folgende Beispiel der Unsicherheitsbetrachtung zeigt, dass mit dem erfindungsgemäßen Verfahren eine überraschend hohe Genauigkeit bei relativ großen Messunsicherheiten erreicht wird:

Um den Vorteil der Methode in Bezug auf die Messgenauigkeit zu erläutern, wird hier ein Beispiel der Unsicherheitsbetrachtung der Wirkungsgradbestimmung eines Getriebes präsentiert.

**Annahme:**

1. Messfehler der Drehmomentmessung von der antreibenden Einheit aus gesehen vor und hinter (left/erstes Ende und right/zweites Ende) dem Getriebe jeweils

    a. $\pm$5% in Sensitivität

    b. $\pm$0.5%*Endwert bezüglich Offset

2. Wirkungsgrade von dem Getriebe $\eta_A$ = $\eta_B$

    a. 97% in normal Mode

    b. 97% in verkehrt Mode

3. Messfehler der Drehzahl unbedeutend

4. Nennleistung 1000 kW, Nenndrehzahl 9.55 rpm

Es wird deutlich, dass sich der Wirkungsgrad anhand der Unsicherheit in den Drehmomentmessungen nicht zuverlässig bestimmen lässt.

**Herleitung im Fall einer aus zwei Versuchen bestehenden Kombinationsmessung, wie in Figur 4 gezeigt:**

P bedeutet in den Rechnungen jeweils die Leistung, T ein Drehmoment und $\omega$ eine Winkelgeschwindigkeit bzw. Drehzahl. Die Indizes bezeichnen jeweils die rechte oder linke Seite des zu vermessenden Antriebsstrangs oder einer Komponente und die Buchstaben A und B den ersten oder zweiten Versuch/Test.

1. Messfehler im gesamten Verlust $P_{Loss.total} = P_{left.A} - P_{left.B} + P_{right.B} - P_{right.A}$
Die Messfehler des Offsets der Drehmomentmessung fallen weg, da nur delta-Wert relevant ist.
Die Unsicherheit von $P_{Loss.total}$ ist dann $\pm$5%.

2. Messfehler in den Leistungen $P_{right.A}$, $P_{right.B}$, $P_{left.A}$ und $P_{left.B}$: jeweils pauschal $\pm$6% bezogen auf Messwerte. Da beinhaltet die 5% Messfehler in Sensitivität und sonstige Messfehler anderer Typ.

Annahme: realer Wert von $P_{left.A}$ ist 1000kW, dann

$$P_{left.A} = 1000 kW$$

$$P_{right.A} = 970 kW$$

Annahme, dass $P_{right.B}$ genau $P_{right.A}$ entspricht:

$$P_{right.B} = 970 kW$$

$$P_{left.B} = 940,9 kW$$

$$P_{Loss.total} = 1000 - 940,9 + 970 - 970 = 59,1 kW$$

Wirkungsgrade gesamt: $\eta_{overal} = \eta_A \cdot \eta_B = 1 - \dfrac{P_{Loss.total}}{P_{left.A}}$ .

Mit der Annahme von +5% Messfehler von $P_{Loss.total}$ und -6% für $P_{left.A}$, ergibt sich der größte mögliche

Messfehler von $\eta_{overal}$:

$$\eta_{overal} = \eta_A \cdot \eta_B = 1 - \frac{59,1 \times 105\%}{1000 \times 94\%} = 93,398\%$$

Da $\eta_A = \eta_B$,

$\eta_A{}^2 = 93,3984\%$

$\eta_A = 96.64\%$

Es ergibt sich ein Fehler von 96.64% - 97% = -0.36%. Im Vergleich zu 5% Fehler in der Drehmomentmessung, ist dies eine deutliche Verbesserung.

Obwohl in die Berechnung einige vereinfachende und optimierte Annahmen eingeflossen sind, bleiben die Vorteile auch bei Abweichungen im Prinzip zum größten Teil erhalten.

### 1. Variante I

Effizienzbestimmung auf einem Prüfstand für mechanische Komponenten, z.B. einem Getriebeprüfstand

Für den Fall, dass ein Getriebe 4 ohne Windenergieanlagen-(WEA)-Antriebsstrang getestet wird, kann es auf beiden Seiten von elektrischen Maschinen 6, 7 des Prüfstandes angetrieben werden. Das oben beschriebene Verfahren kann ebenso genutzt werden.

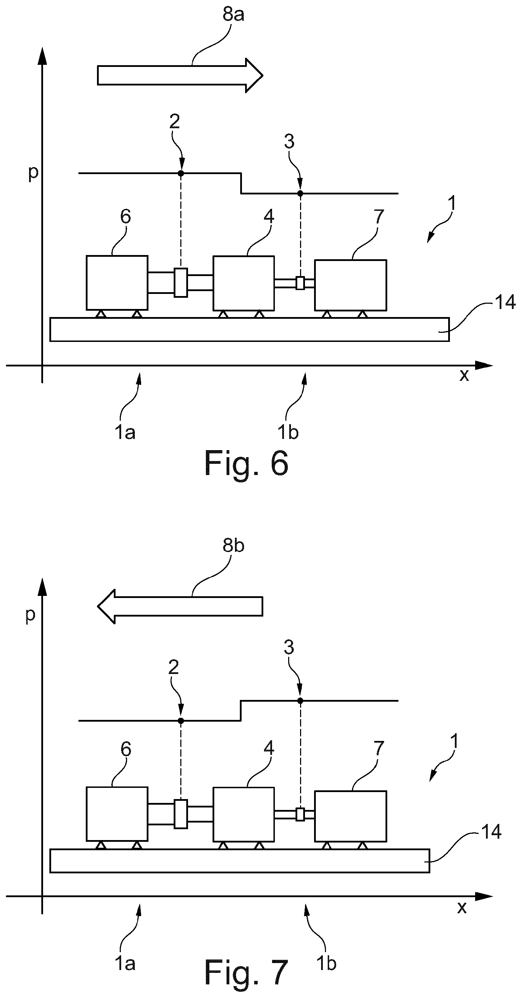

Da es bei dem Test nur ein Getriebe gibt, können bestimmte "Load Application Unit" (LAU) Systeme verwendet werden, um parasitäre Lasten auf das Getriebe zu applizieren. Die Variante ist in den Figuren 6, 7 und 8 gezeigt und wird anhand dieser Figuren beschrieben.

Figur 6 zeigt den Aufbau für Test A. Das Getriebe wird von der linken Seite von Motor 6 angetrieben. Die zweite Antriebseinheit 7 arbeitet im Generator Mode.

Figur 7 zeigt die Konstellation für den Test B (zweiten Versuch). Das Getriebe wird von der rechten Seite von Motor 7 angetrieben. Motor 6 arbeitet in Generator -Mode. Die Drehrichtung aller Wellenabschnitte des Antriebsstrangs ist im Vergleich zu Test A aus Figur 6 umgekehrt.

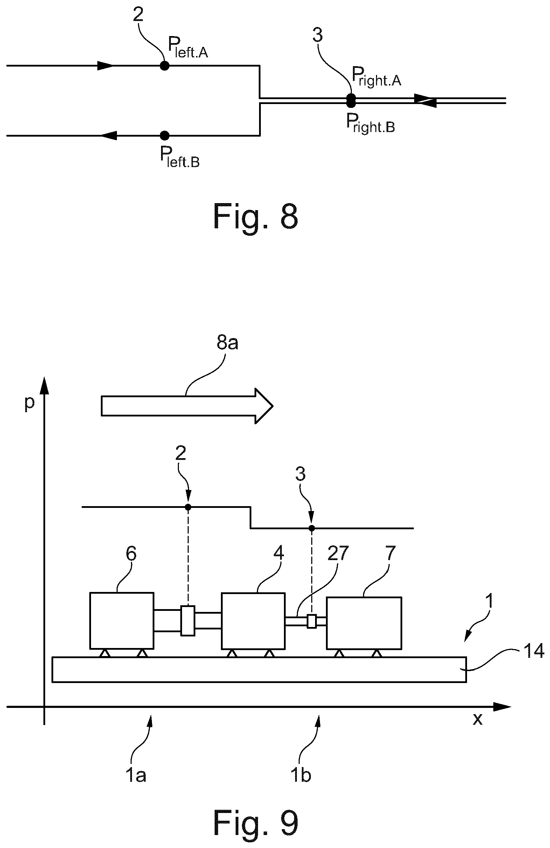

Figur 8 zeigt die Niveaus der übertragenen Leistungen und Drehmomente an den Punkten 2 (erstes Ende/linke Seite des zu prüfenden Antriebsstrangs) und 3 (zweites Ende/rechte Seite des Antriebsstrangs): Bei den genannten beiden Versuchen sind die Leistungen auf der rechten Seite (am Punkt 3) etwa gleich gehalten.

Die Leistungen können aus den Messungen der Drehmomente (an den Punkten 2 und 3 gemessen) und Drehzahlen (der Ort dieser Messung ist entlang des Antriebsstrangs wählbar, optimiert in der Nähe der Drehmomentmessungen) einfach bestimmt werden.

P bedeutet in den Rechnungen jeweils die Leistung, T ein Drehmoment und $\omega$ eine Winkelgeschwindigkeit bzw. Drehzahl. Die Indizes bezeichnen jeweils die rechte oder linke Seite des zu vermessenden Antriebsstrangs oder einer Komponente und die Buchstaben A und B den ersten oder zweiten Versuch/Test.
zum Beispiel:

$$P_{left.A} = T_{left.A} \cdot \omega_A$$

$$P_{right.A} = T_{right.A} \cdot \omega_A$$

Der gesamte Leistungsverlust:

$$P_{Loss.total} = P_{left.A} - P_{left.B} + P_{right.B} - P_{right.A}$$

Annahme: $P_{Loss.A} = k \cdot P_{Loss.B}$

Die Effizienz eines individuellen Tests wird bestimmt als:

$$\eta_A = 1 - \frac{P_{Loss.A}}{P_{left.A}} = 1 - \frac{k}{k+1}\frac{P_{Loss.total}}{P_{left.A}}$$

$$\eta_B = 1 - \frac{P_{Loss.B}}{P_{right.B}} = 1 - \frac{1}{k+1}\frac{P_{Loss.total}}{P_{right.B}}$$

### 2. Variante II

Diese Variante bietet sich für den Fall an, dass beide Tests/Versuche nur mit derselben Drehrichtung gefahren werden dürfen, so dass die Wirkung der Drehmomentrichtung sich von Versuch 1 zu Versuch 2 umkehrt.

In bestimmten Fällen dürfen die getesteten Antriebsstränge oder Komponente nur in einer bestimmten Drehrichtung gefahren werden, z.B. wegen des Betriebs von Gleitlagern oder Schrägverzahnungen im Getriebe.

Als ein Beispiel wird anhand der Figuren 9, 10 und 11 ein Getriebeprüfstand betrachtet.

Figur 9 zeigt die Konstellation für den ersten Versuch/Test A. Das Getriebe wird von der linken Seite von Motor 6 angetrieben. Die elektrische Maschine 7 arbeitet im Generator- Mode.

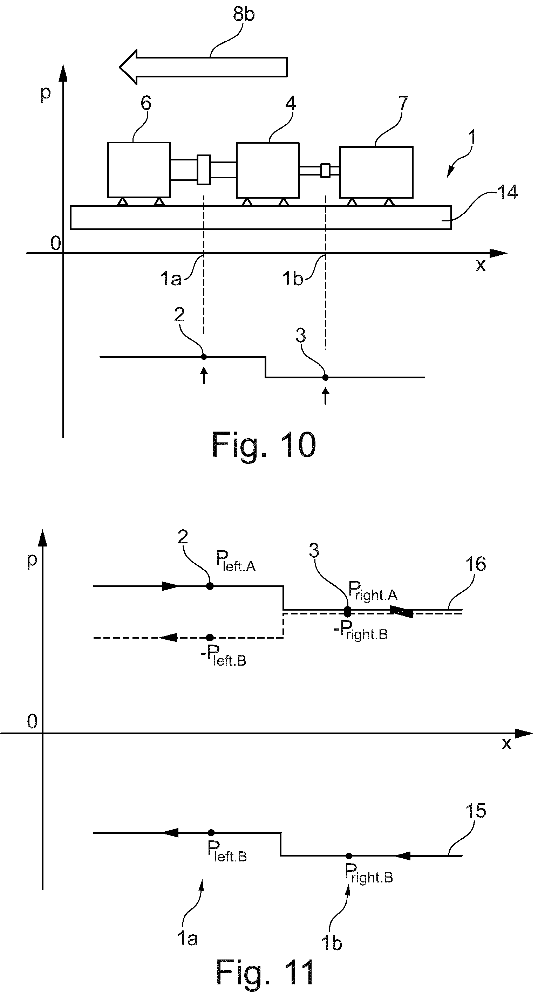

Figur 10 zeigt die Konstellation des zweiten Versuchs/Test B. Das Getriebe 7 wird von der rechten Seite von der elektrischen Maschine 7 im Motorbetrieb angetrieben. Der Motor/die elektrische Maschine 6 arbeitet im Generator - Mode. Die Drehrichtung ist beim Test B unverändert im Vergleich zum Test A. Wegen der unveränderten Drehrichtung ändert sich das Vorzeichen der wirkenden und gemessenen Drehmomente.

Figur 11 zeigt ein Diagramm der entlang dem Antriebsstrang an den Punkten 2 und 3 beziehungsweise an den Enden 1a und 1b des Antriebsstrangs gemessenen Leistungen oder Drehmomente. Kurve 16 zeigt die Drehmomente/- Leistungen aus Versuch 1/Test A. Mit der Vorzeichenänderung bei den im Test B gemessenen Drehmomente und Leistungen (Kurve 15) lässt sich die gesamte Verlustleistung beider Tests über einen großen Drehmomentbereich bestimmen.

Die Leistungen können mit der Erfassung von Drehmoment und Drehzahl einfach bestimmt werden. zum Beispiel:

$$P_{left.A} = T_{left.A} \cdot \omega_A$$

$$P_{right.A} = T_{right.A} \cdot \omega_A$$

Der gesamte Leistungsverlust:

$$P_{Loss.total} = P_{left.A} + P_{left.B} - P_{right.B} - P_{right.A}$$

Anmerkung: der Leistungsverlust ist definiert als Absolutwert:

$$P_{Loss.B} = abs(P_{right.B} - P_{left.B}) = P_{left.B} - P_{right.B}$$

Annahme: $P_{Loss.A} = k \cdot P_{Loss.B}$

Die Effizienz eines individuellen Tests wird bestimmt als:

$$\eta_A = 1 - \frac{P_{Loss.A}}{P_{left.A}} = 1 - \frac{k}{k+1}\frac{P_{Loss.total}}{P_{left.A}}$$

$$\eta_B = 1 - \frac{P_{Loss.B}}{abs(P_{right.B})} = 1 - \frac{1}{k+1}\frac{P_{Loss.total}}{abs(P_{right.B})}$$

Die Unsicherheit dieser Methode ist sehr empfindlich bezüglich des sog. Offset-Fehlers. Da die Werte von Drehmoment bzw. Leistung in Test B am Null-Level gespiegelt werden (Vorzeichenwechsel), ist es wichtig, dass dieses Null-Level genau bestimmt wird. Der Drift oder Offset der Drehmomentmessung könne auf verschiedene Arten bestimmt und kompensiert werden, zum Beispiel mit folgenden Methoden:

Null -Kompensation **Methode 1:** Die Drehmomentmessung wird einmal vor der Montage ausgetestet (nulling), um festzustellen, um einen Messpunkt zu definieren für den das Drehmoment Null ist.

Null -Kompensation **Methode 2:** In Leerlaufmode wird der Antriebsstrang von einer Seite einmal in einer ersten Richtung langsam gedreht und danach in der entgegengesetzten Richtung noch einmal. Der Mittelwert von Drehmomentmesswerten in den zwei Tests wird als Null - Drehmoment definiert.

### 3. Variante III

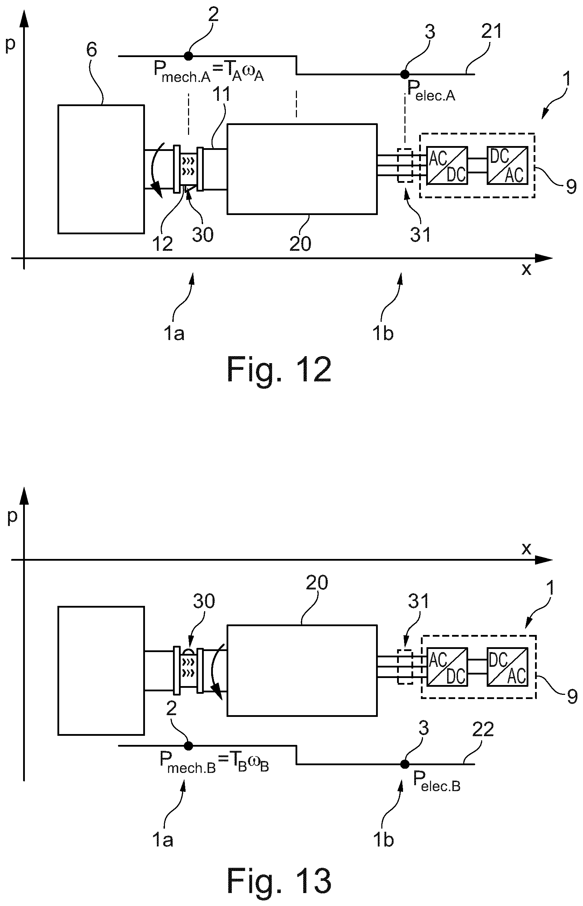

Dieses Beispiel bezeichnet die gleiche Methode wie Variante II, jedoch angewendet auf eine elektrische Maschine, zum Beispiel den Antriebsstrang einer Windenergieanlage, wie dies anhand der Figuren 12, 13 und 14 im Folgenden erläutert wird. Die auf der rechten Seite oder auch auf der linken Seite, beispielsweise mittels eines Strom- und Spannungssensors 31 bestimmten Leistungen $P_{right.A}$ und $P_{right.B}$ können in Form von elektrischen Leistungen, beispielsweise durch Strom- und Spannungsmessungen, bestimmt werden, anstelle von oder zusätzlich zu Drehmoment- und Drehzahlmessungen. Damit kann die oben dargestellte Messmethode entweder überprüft, geeicht, ersetzt oder ergänzt werden. Es kann durch die mit dem erfindungsgemäßen Verfahren kombinierten elektrischen Messungen auch die gesamte Anlage einschließlich des Generators und potenziell auch des Umrichters bezüglich der Effizienz vermessen werden. Auch bei diesem Messverfahren kann bei beiden Versuchen entweder dieselbe oder eine unterschiedliche Drehrichtung, das heißt also auch eine unterschiedliche oder dieselbe Richtung der Drehmomente gewählt werden.

### 4. Methode zur Drehmomentkalibrierung

Im Zusammenhang mit dem hier beschriebenen Verfahren ergeben sich somit alternative und ergänzende Methoden zum Kalibrieren der Drehmomentmessung zum Patent DE 10 2018 203 525

### 4.1 Erweiterung I

In dem hier beispielhaft beschriebenen Fall wird der Antriebsstrang in Test B nicht in entgegengesetzter Richtung gedreht, sondern die Drehrichtung bleibt unverändert. Die Drehmomentmessung kann kalibriert werden. Das Beispiel ist in den Figuren 12, 13 und 14 gezeigt.

Figur 12 zeigt in der Konstellation eines ersten Versuchs einen Teil einer WEA 20 mit einem Generator auf einem Prüfstand, wobei die Hauptwelle 11 der WEA im ersten Versuch vom ersten Ende mittels eines Wellenadapters 12 durch einen Motor 6 angetrieben wird. An den Generator der WEA ist ein Umrichter 9 elektrisch angeschlossen. Die WEA 20 kann außer dem Generator ein Getriebe und weitere Komponenten enthalten. Das Niveau der übertragenen Leistung ist entlang des Antriebsstranges durch die Kurve 21 dargestellt. Die übertragene Leistung oder Energie/der Kraftfluss ist in der Figur 12 von links nach rechts gerichtet.

In Figur 13 ist die Konstellation für den zweiten Versuch/ Test B dargestellt. Die WEA 20 wird als Motor betrieben und der Motor 6 des Prüfstands als Generator. Die Drehrichtung bleibt gegenüber Test A/Versuch 1 unverändert. Der Energie- oder der Kraftfluss ist von rechts nach links gerichtet. Die Kurve 22 stellt das Niveau der übertragenen Leistung/Energie/des Drehmomentes entlang dem Antriebsstrang dar.

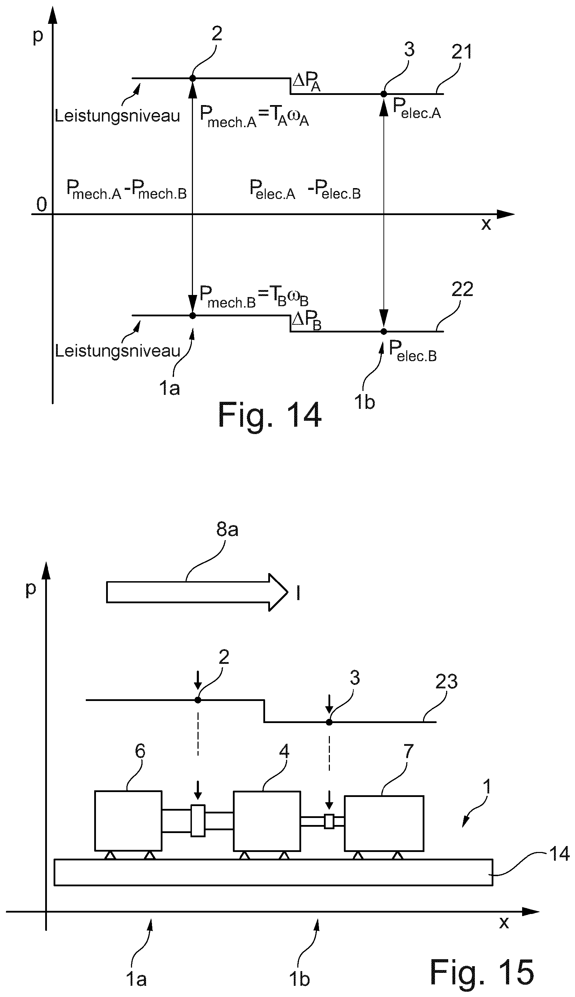

Figur 14 zeigt mit den Kurven 21, 22 übereinander den Verlauf der Leistungen/Drehmomenten entlang dem Antriebsstrang für beide Versuche. Die Differenz der Leistungen zwischen Test A und Test B kann als Basis für die Drehmomentkalibrierung verwendet werden. Für die Kurve 22 gilt ein Kraftfluss von rechts nach links, für die Kurve 21 die umgekehrte Richtung.

Es gilt:

$$\left| \Delta P_A \right| = abs(P_{mech.A} - P_{elec.A})$$

$$\left| \Delta P_B \right| = abs(P_{elec.B} - P_{mech.B})$$

$$P_{mech.A} = P_{elec.A} + \left| \Delta P_A \right|$$

$$P_{mech.B} = P_{elec.B} + \left| \Delta P_B \right|$$

$$\left( P_{mech.A} - P_{mech.B} \right) = \left( P_{elec.A} - P_{elec.B} \right) + \left( \left| \Delta P_A \right| - \left| \Delta P_B \right| \right)$$

Die Verluste haben sich gegeneinander in ($\Delta P_A$ - $\Delta P_B$) ungefähr kompensiert, sie spielen daher in der Gleichung nur eine Nebenrolle.

Eine Gleichung zwischen der zu kalibrierenden Seite (mechanische Messung) und der Referenzmessung (elektrische Messung) ist somit erstellt. Anhand der Gleichung oder mehrerer solcher Gleichungen von unterschiedlichen Arbeitspunkten, das heißt auf unterschiedlichen Leistungs- und Drehmomentniveaus, ist eine Kalibrierung möglich. Um eine vollständige Kalibrierung zu ermöglichen, ist eine Gleichung für Null Drehmoment notwendig.

Nur mit den Gleichungen der Delta-Leistung erworben auf verschiedenen Arbeitspunkten kann man nur die Sensitivität gut bestimmen, also nur den Faktor a, den Faktor b aber nicht. Der Faktor b spielt in der Gleichung

$$a(\varepsilon_A \omega_A - \varepsilon_B \omega_B) + b(\omega_A - \omega_B) = (P_{elec.A} - P_{elec.B}) + (\left| \Delta P_A \right| - \left| \Delta P_B \right|)$$

eine sehr minimale Rolle, da der Absolutwert von ($\omega_A$ - $\omega_B$) quasi null ist.

Eine beispielhafte Möglichkeit ist unten vorgestellt.

Annahme: Drehmomentmessung hier gegeben durch das Rohsignal $\varepsilon$, welches sich mittels eines linearen Bezugs zum Drehmoment T konvertieren lässt.

$$T = a \cdot \varepsilon + b$$

Parameter a und b sind zu bestimmen in einer Kalibrierung.

$$P_{mech.A} - P_{mech.B} = T_A \omega_A - T_B \omega_B$$
$$= (a\varepsilon_A + b)\omega_A - (a\varepsilon_B + b)\omega_B$$
$$= a(\varepsilon_A \omega_A - \varepsilon_B \omega_B) + b(\omega_A - \omega_B)$$

In der folgenden Gleichung sind außer den zu bestimmenden Parametern a und b alle anderen bekannt. ($\Delta P_A$ - $\Delta P_B$) kann man entweder auslassen oder mit einem angenommenen Wert ersetzen.

$$a(\varepsilon_A \omega_A - \varepsilon_B \omega_B) + b(\omega_A - \omega_B) = (P_{elec.A} - P_{elec.B}) + (\left| \Delta P_A \right| - \left| \Delta P_B \right|)$$

Zusammen mit einer weiteren Gleichung, z.B. des Null-Drehmoment-Zustands, sind a und b bestimmbar.

$$\begin{cases} a(\varepsilon_A \omega_A - \varepsilon_B \omega_B) + b(\omega_A - \omega_B) = (P_{elec.A} - P_{elec.B}) + (\left| \Delta P_A \right| - \left| \Delta P_B \right|) \\ a\varepsilon_0 + b = 0 \end{cases}$$

### 4.2 Erweiterung II

Bei einer weiteren alternativen Methode zum Kalibrieren der Drehmomentmessung beruht die Kalibrierung nicht auf elektrischer Leistungsmessung, sondern ausschließlich auf mechanischen Messungen.

Anstatt auf elektrischer Leistung kann die Kalibrierung der Drehmomentmessung auf der langsam drehenden Welle auch indirekt mit einem Drehmomentaufnehmer auf der schnell drehenden Welle auf der anderen Seite des Getriebes realisiert sein.

Die hier vorgestellte Idee ist ähnlich zur "Erweiterung I", mit dem Unterschied, dass anstelle der elektrischen Leistung eine mechanische Leistung mit einem Drehmomentaufnehmer und einer Drehzahlerfassung gemessen wird. Dies wird anhand der Figuren 15, 16 und 17 erläutert. Die Drehmomentmessungen finden am ersten Ende 1a und am zweiten Ende 1b des Antriebsstrangs 1 zwischen den beiden elektrischen Maschinen 6 und 7 des Prüfstandes statt, auf den Verlaufskurven 23 und 24 der übertragenen mechanischen Leistung P sind die Messpunkte, wie in den übrigen Figuren, mit 2 und 3 bezeichnet.

Figur 15 zeigt die Konstellation des ersten Versuchs/Test A. Auf dem Prüfstand wird als Testobjekt ein Getriebe 4 mit Wellenansätzen vermessen. Die erste Maschine/Antriebseinheit 6 wird als Motor betrieben und die zweite Maschine/-Antriebseinheit 7 als Last oder Generator.

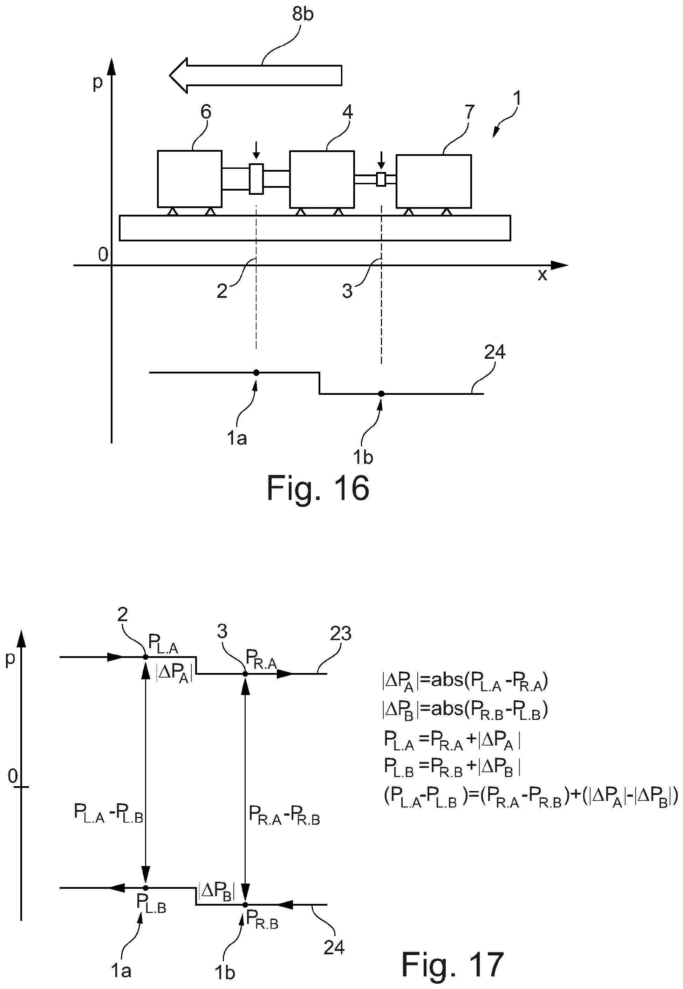

In Figur 16 ist die Konstellation des zweiten Versuchs/Test B gezeigt. Die Maschine 7 wird als antreibender Motor betrieben und die Maschine 6 als Last/Generator. Die Drehrichtung bleibt bei beiden Versuchen unverändert.

Figur 17 zeigt die beiden Kurven 23 und 24, die entlang dem Antriebsstrang das Niveau der übertragenen Leistung oder des übertragenen Drehmomentes darstellen. Die Differenz der an beiden Enden übertragenen Leistungen zwischen Test A und Test B kann als Basis für die Drehmomentkalibrierung genutzt werden.

Anders als gemäß der Figur 14, sind in diesem Beispiel die gemessenen elektrischen Leistungen durch gemessene Drehmomente und Drehzahlen ersetzt. Das heißt, die Drehmomentmessung am linken/ersten bzw. rechten/zweiten Ende des zu vermessenden Antriebsstrangs kann jeweils mittels der anderen kalibriert werden. Ist zum Beispiel die Drehmomentmessung auf der rechten Seite präziser als die der linken, beispielsweise durch die Untersetzung mittels eines Getriebes, dann kann man die Messung links mit der rechten Messung kalibrieren.

### 4.3 Erweiterung III

Das oben beschriebene Testverfahren kann als Drehmomentkalibrierung verwendet werden, unter der Voraussetzung, dass auf der schnell drehenden Seite eines Getriebes bei entsprechend geringen und deshalb mit der notwendigen Genauigkeit erfassbaren Drehmomentwerten eine Drehmomentmessung mit ausreichender Genauigkeit durchgeführt wird, z.B. mittels eines sogenannten Torque Transducers. Anders als gemäß der DE102018203525 wird diese genauere mechanische Leistungsmessung anstelle einer elektrischen Leistungsmessung als die Referenz der Kalibrierung benutzt.

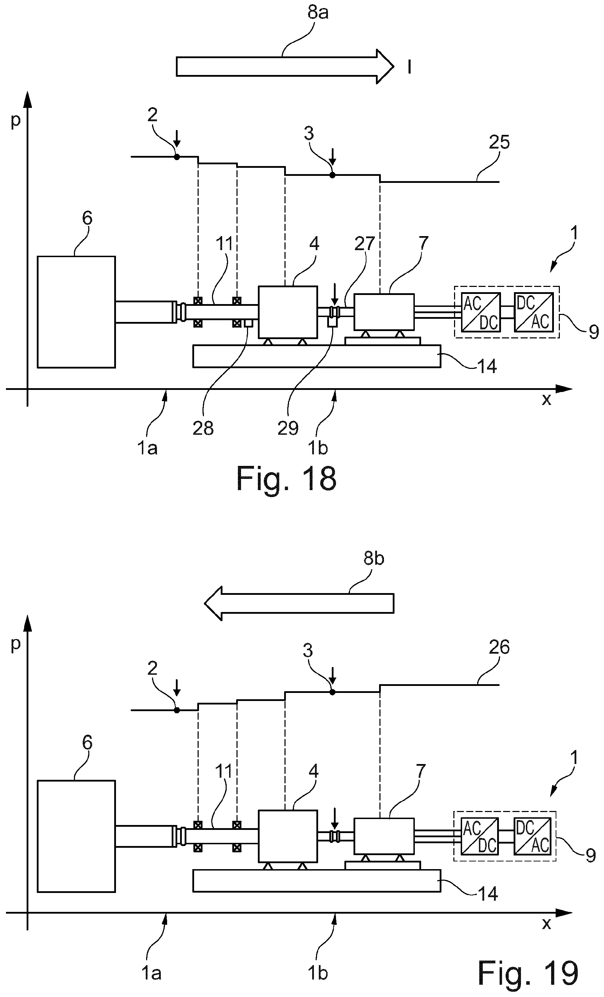

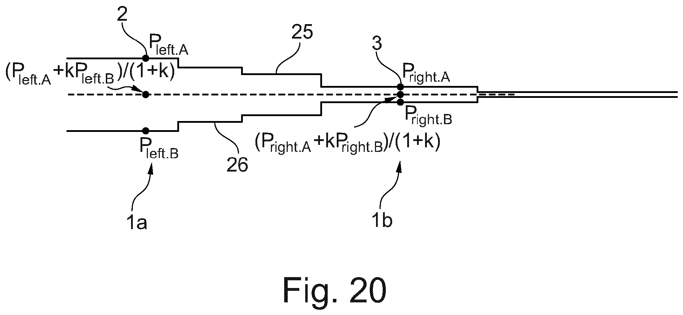

Die Figuren 18 bis 20 beziehen sich auf die Verwendung eines präzisen Drehmomentaufnehmers, der zwischen dem Getriebe und dem Generator eines WEA Antriebsstrangs installiert ist.

Figur 18 zeigt die Konstellation des ersten Versuchs/Test A. Der Motor 6 des Prüfstands treibt die Hauptwelle 11 der WEA. Damit wird das Getriebe 4 und der Generator 7 angetrieben. Ein präziser Drehmomentaufnehmer ist am Messpunkt 3 zwischen Getriebe und Generator installiert. Dieser misst bei der höheren Drehzahl das Drehmoment deutlich genauer als ein Drehmomentaufnehmer, der am Messpunkt 2 zwischen dem Motor 6 und dem Getriebe installiert ist und dort das Drehmoment bei der geringeren Drehzahl misst. Die Leistungs/Drehmomentverluste sind durch die Kurve 25 angezeigt.

Figur 19 zeigt die Konstellation des zweiten Versuchs/Test B mit einem umgekehrten Betrieb des Prüfstands und der WEA, wobei der Generator 7 der WEA den Motor 6 des Prüfstands antreibt. Die Richtungen der Energieflüsse/der Drehmomentübertragung sind durch die Pfeile 8a und 8b gezeigt, die Leistungs/Drehmomentverluste sin durch die Kurve 26 angezeigt. Die Drehrichtung ist im zweiten Versuch gegenüber dem ersten Versuch umgekehrt.

Für die Leistungsverluste des Antriebsstrangs zwischen den beiden Drehmomentmessungen gilt:

$$P_{Loss.A} = P_{left.A} - P_{right.A} \qquad P_{Loss.B} = P_{right.B} - P_{left.B}$$

Annahme: $P_{Loss.A} = k \cdot P_{Loss.B}$

$$P_{left.A} - P_{right.A} = k(P_{right.B} - P_{left.B})$$

$$P_{left.A} + kP_{left.B} = P_{right.A} + kP_{right.B}$$

Werden Test A und Test B an anderen Arbeitspunkten wiederholt, können weitere Gleichungen aufgestellt und das Gleichungssystem kann zumindest näherungsweise gelöst werden. Auf diese Weise ist eine Kalibrierung möglich.

### Patentansprüche

1.  Verfahren zum Ermitteln einer Effizienz eines Antriebstrangs (1), oder eines Teils eines Antriebsstrangs, einer Windenergieanlage (4, 7, 11), wobei der Antriebstrang (1) ein erstes Ende (1a) mit einem mittels einer ersten Antriebseinrichtung (6) in Form eines Elektromotors antreibbaren ersten Wellenabschnitt (11) und ein zweites Ende (1b) mit einem mittels einer zweiten Antriebseinrichtung (7) in Form eines Elektromotors antreibbaren zweiten Wellenabschnitt (27) aufweist, zwischen denen ein mechanisches Übertragungselement, insbesondere ein Getriebe, angeordnet ist, wobei die Elektromotoren zumindest teilweise auch im Generatorbetrieb arbeiten können, wobei in einem ersten Versuch das erste Ende des Antriebstrangs (1) angetrieben wird und das Drehmoment unmittelbar durch einen Sensor sowie eine Winkelposition oder eine Drehgeschwindigkeit am ersten Ende (1a) des Antriebstrangs (1) sowie am zweiten Ende (1b) des Antriebstrangs (1) das Drehmoment unmittelbar durch einen Sensor sowie eine Winkelposition oder eine Drehgeschwindigkeit erfasst werden, und wobei in einem zweiten Versuch das zweite Ende (1b) des Antriebstrangs (1) angetrieben wird und das Drehmoment unmittelbar durch einen Sensor sowie eine Winkelposition oder eine Drehgeschwindigkeit am zweiten Ende (1b) des Antriebstrangs (1) sowie am ersten Ende (1a) des Antriebstrangs (1) das Drehmoment unmittelbar durch einen Sensor sowie eine Winkelposition oder eine Drehgeschwindigkeit erfasst werden und aus den im ersten Versuch und im zweiten Versuch aufgrund der Drehmomente bestimmten mechanischen Leistungen eine Effizienz unter Berücksichtigung mindestens einer aufgrund von Experimenten oder Erfahrung oder Analyse vorbestimmten Annahme ermittelt wird.

2. Verfahren zur Kalibrierung einer Drehmomentmessung eines Antriebstrangs (1) oder eines Teils eines Antriebstrangs einer Windenergieanlage (4, 7, 11) an einem Prüfstand (6, 14), wobei der Antriebstrang ein erstes Ende (1a) mit einem mittels einer ersten, als Elektromotor ausgebildeten Antriebseinrichtung (6) antreibbaren ersten Wellenabschnitt (11) und ein zweites Ende (1b) mit einem mittels einer zweiten, als Elektromotor ausgebildeten Antriebseinrichtung (7) antreibbaren zweiten Wellenabschnitt (27) aufweist, zwischen denen ein mechanisches Übertragungselement, insbesondere ein Getriebe (4), angeordnet ist, wobei die Elektromotoren zumindest teilweise auch im Generatorbetrieb arbeiten können, wobei in einem ersten Versuch das erste Ende des Antriebstrangs angetrieben wird und das Drehmoment unmittelbar durch einen Sensor sowie eine Winkelposition oder eine Drehgeschwindigkeit am ersten Ende (1a) des Antriebstrangs (1) sowie am zweiten Ende (1b) des Antriebstrangs (1) das Drehmoment unmittelbar durch einen Sensor sowie eine Winkelposition oder eine Drehgeschwindigkeit erfasst werden, und wobei in einem zweiten Versuch das zweite Ende des Antriebstrangs (1) angetrieben wird und das Drehmoment unmittelbar durch einen Sensor sowie eine Winkelposition oder eine Drehgeschwindigkeit am zweiten Ende (1b) des Antriebstrangs (1) sowie das Drehmoment unmittelbar durch einen Sensor sowie eine Winkelposition oder eine Drehgeschwindigkeit e am ersten Ende (1a) des Antriebstrangs (1) erfasst werden und aus den im ersten Versuch und im zweiten Versuch unter Berücksichtigung der ebenfalls erfassten Drehzahlen bestimmten mechanischen Leistungen Kalibrierparameter a und b unter Berücksichtigung mindestens einer aufgrund von Experimenten oder Erfahrung oder Analyse vorbestimmten Annahme ermittelt werden, wobei der erste und der zweite Versuch für zumindest zwei verschiedene Drehmomentenstufen, von denen eine eine Null-Drehmomentstufe sein kann, durchgeführt werden.

3. Verfahren gemäß Anspruch 1 oder 2, **dadurch gekennzeichnet, dass** eine Annahme zur Bestimmung der Effizienz bzw. zur Kalibrierung einer Drehmomentmessung die Annahme ist, dass die Effizienz des ersten Versuchs gleich der Effizienz des zweiten Versuchs ist.

4. Verfahren gemäß Anspruch 1 oder 2, **dadurch gekennzeichnet, dass** eine Annahme zur Bestimmung der Effizienz bzw. zur Kalibrierung einer Drehmomentmessung die Annahme ist, dass eine Verlustleistung des einen der beiden Versuche ein bestimmter Bruchteil der Gesamtverlustleistung der beiden Versuche ist.

5. Verfahren gemäß einem der vorangehenden Ansprüche, **dadurch gekennzeichnet, dass** das Drehmoment mit einem Dehnungsmessstreifen, gemessen wird und/oder dass eine Winkelposition $\Theta$ des Wellenabschnitts oder seine Rotationsgeschwindigkeit $\omega$, mit einem Inkrementalgeber, gemessen wird.

6. Verfahren gemäß einem der vorangehenden Ansprüche, **dadurch gekennzeichnet, dass** jeweils im ersten und/oder zweiten Versuch auf der Antriebsseite und/oder der Abtriebsseite ergänzend zu dem Drehmoment sowie einer Winkelposition oder einer Drehgeschwindigkeit ße eine elektrische Leistung der als Motor oder Generator betriebenen Antriebseinheit (6, 7) gemessen wird, wobei insbesondere zur Bestimmung der elektrischen Leistung an einem der Antriebe mindestens eine Spannung und mindestens ein Strom gemessen werden.

7. Verfahren gemäß einem der vorangehenden Ansprüche , **dadurch gekennzeichnet, dass** für den ersten Versuch und für den zweiten Ver-such jeweils eine Versuchs-Verlustleistung ermittelt wird, diese beiden ermittelten Versuchs-Verlustleistungen zu einer Gesamtverlustleistung addiert werden und die Effizienz unter Verwendung der Gesamtverlustleistung berechnet wird.

8. Verfahren gemäß einem der vorangehenden Ansprüche, **dadurch gekennzeichnet, dass** zur Bestimmung des Drehmoments das Messsignal eines Sensors (28, 29) ausgewertet wird, der an dem jeweiligen Wellenabschnitt (11, 27) oder an einem Wellenadapter (12) zwischen dem jeweiligen Wellenabschnitt und einem benachbarten Wellenabschnitt angeordnet ist.

9. Verfahren gemäß einem der vorangehenden Ansprüche, **dadurch gekennzeichnet, dass** während des ersten Versuchs verschiedene Arbeitspunkte des Antriebstrangs (1) angesteuert werden und während des zweitens Versuchs verschiedene Arbeitspunkte des Antriebstrangs (1), angesteuert werden, wobei die angesteuerten Arbeitspunkte im ersten und zweiten Versuch vorzugsweise die gleichen sind.

10. Verfahren gemäß einem der vorangehenden Ansprüche, **dadurch gekennzeichnet, dass** in dem zweiten Versuch das zweite Ende (1b) des Antriebstrangs (1) derart angetrieben wird, dass das auf den ersten Wellenabschnitt (11) wirkende Drehmoment im zweiten Versuch gleich dem im ersten Versuch bestimmten, auf den ersten Wellenabschnitt (11) wirkenden Drehmoment ist.

11. Verfahren gemäß einem der Ansprüche 1 bis 9, **dadurch gekennzeichnet, dass** in dem zweiten Versuch das zweite Ende (1b) des Antriebstrangs (1) derart angetrieben wird, dass das auf den zweiten Wellenabschnitt (27) wirkende Drehmoment im zweiten Versuch gleich der im ersten Versuch bestimmten, auf den zweiten Wellenabschnitt (27) wirkenden Drehmoment ist.

12. Verfahren gemäß einem der vorhergehenden Ansprüche, **dadurch gekennzeichnet, dass** der Drehsinn des ersten und zweiten Wellenabschnittes (11, 27) beim ersten und zweiten Versuch derselbe ist.

13. Verfahren gemäß einem der vorhergehenden Ansprüche, wobei unter Verwendung des auf den ersten Wellenabschnitt (11) wirkenden Drehmoments eine mechanische Leistung $P_{mechA}$ und $P_{mechB}$ in Abhängigkeit zweier Konstanten a und b jeweils für den ersten Versuch und für den zweiten Versuch bestimmt werden und anhand $P_{mech.left.A}-P_{mech.right.A}=k(P_{mech.right.B}-P_{mech.left.B})$ und $P_{mech.left.A}+kP_{mech.left.B}=kP_{mech.right.B}+ P_{mech.right.A}$ wobei k ein Verhältnis zwischen den Verlusten (in Form einer übertragenen Energie als Integral) des ersten Versuchs

$$P^{int}_{mechA} = \text{Integral } (a *\varepsilon+b) \, d\Theta/t_A$$

und des zweiten Versuchs

$$P^{int}_{mechB} = \text{Integral } (a *\varepsilon+b) \, d\Theta/t_B$$

ist, die Kalibrierparameter a und b zum Bestimmen eines Drehmoments $T=a *\varepsilon+b$ ermittelt werden, wobei T das Drehmoment und $\varepsilon$ das auf den ersten Wellenabschnitt (11) wirkende Drehmoment ist.

**Claims**

1. A method for determining an efficiency of a drive train (1), or a part of a drive train, of a wind turbine (4, 7, 11), wherein the drive train (1) comprises a first end (1a) comprising a first shaft section (11) which can be driven by means of a first drive apparatus (6) in the form of an electric motor and a second end (1b) comprising a second shaft section (27) which can be driven by means of a second drive apparatus (7) in the form of an electric motor, between which ends a mechanical transfer element, in particular a transmission, is arranged, wherein the electric motors can also operate in generator operation at least at times, wherein, in a first test, the first end of the drive train (1) is driven and the torque is detected directly by a sensor and an angular position or a rotational speed is also detected at the first end (1a) of the drive train (1) and, at the second end (1b) of the drive train (1), the torque is detected directly by a sensor and an angular position or a rotational speed is also detected, and wherein, in a second test, the second end (1b) of the drive train (1) is driven and the torque is detected directly by a sensor and an angular position or a rotational speed is also detected at the second end (1b) of the drive train (1) and, at the first end (1a) of the drive train (1), the torque is detected directly by a sensor and an angular position or a rotational speed is also detected, and an efficiency is determined from the mechanical powers determined in the first test and in the second test on the basis of the torques taking into account at least one assumption predetermined on the basis of experiments, experience, or analysis.

2. A method for calibrating a torque measurement of a drive train (1) or a part of a drive train of a wind turbine (4, 7, 11) on a test bench (6, 14), wherein the drive train comprises a first end (1a) comprising a first shaft section (11) which can be driven by means of a first drive apparatus (6) configured as an electric motor and a second end (1b) comprising a second shaft section (27) which can be driven by means of a second drive apparatus (7) configured as an electric motor, between which ends a mechanical transfer element, in particular a transmission (4), is arranged, wherein the electric motors can also operate in generator operation at least at times, wherein, in a first test, the first end of the drive train is driven and the torque is detected directly by a sensor and an angular position or a rotational speed is also detected at the first end (1a) of the drive train (1) and, at the second end (1b) of the drive train (1), the torque is detected directly by a sensor and an angular position or a rotational speed is also detected, and wherein, in a second test, the second end of the drive train (1) is driven and the torque is detected directly by a sensor and an angular position or a rotational speed is also detected at the second end (1b) of the drive train (1) and the torque is detected directly by a sensor and an angular position or a rotational speed e is also detected at the first end (1a) of the drive train (1), and calibration parameters a and b are determined from the mechanical powers determined in the first test and in the second test taking into account the likewise detected speeds, taking into account at least one assumption predetermined on the basis of experiments, experience, or analysis, wherein the first and the second test are carried out for at least two different torque levels, one of which can be a zero torque level.

3. The method according to claim 1 or 2, **characterized in that** one assumption for determining the efficiency and for calibrating a torque measurement is the assumption that the efficiency of the first test is equal to the efficiency of the second test.

4. The method according to claim 1 or 2, **characterized in that** one assumption for determining the efficiency and for calibrating a torque measurement is the assumption that a power loss of one of the two tests is a specific fraction of the total power loss of the two tests.

5. The method according to any one of the preceding claims, **characterized in that** the torque is measured using a strain gauge and/or **in that** an angular position $\Theta$ of the shaft section or its rotational speed $\omega$ is measured using an incremental encoder.

6. The method according to any one of the preceding claims, **characterized in that** in the first and/or second test on the drive side and/or the output side, an electrical power of the drive unit (6, 7) operated as a motor or generator is measured in addition to the torque and an angular position or a rotational speed, wherein at least one voltage and at least one current are measured in particular to determine the electrical power at one of the drives.

7. The method according to any one of the preceding claims, **characterized in that** for each of the first test and the second test, a test power loss is determined, these two asdetermined test power losses are added together to give a total power loss, and the efficiency is calculated using the total power loss.

8. The method according to any one of the preceding claims, **characterized in that** to determine the torque, the measurement signal from a sensor (28, 29) is evaluated which is arranged on the respective shaft section (11, 27) or on a shaft adapter (12) between the respective shaft section and an adjacent shaft section.

9. The method according to any one of the preceding claims, **characterized in that** during the first test, different working points of the drive train (1) are actuated and during the second test, different working points of the drive train (1) are actuated, wherein the actuated working points are preferably the same in the first and the second test.

10. The method according to any one of the preceding claims, **characterized in that** in the second test, the second end (1b) of the drive train (1) is driven such that the torque acting on the first shaft section (11) in the second test is the same as the torque acting on the first shaft section (11) determined in the first test.

11. The method according to any one of claims 1 to 9, **characterized in that** in the second test, the second end (1b) of the drive train (1) is driven such that the torque acting on the second shaft section (27) in the second test is the same as the torque acting on the second shaft section (27) determined in the first test.

12. The method according to any one of the preceding claims, **characterized in that** the rotational direction of the first and the second shaft section (11, 27) during the first and the second test is the same.

13. The method according to any one of the preceding claims, wherein a mechanical power $P_{mechA}$ and $P_{mechB}$ are determined using the torque acting on the first shaft section (11) and on the basis of two constants a and b for the first test and for the second test, and on the basis of $P_{mech.ieft.A} - P_{mech.right.A} = k(P_{mech.right.B} + P_{mech.left.B})$ and $P_{mech.left.A} + k_{Pmech.left.B} = k_{Pmech.right.B} + P_{mech.right.A}$, where k is a ratio between the losses (in the form of a transmitted energy as an integral) of the first test

$$P^{int}_{mechA} = integral\ (a\ {*}\varepsilon+b)\ d\Theta/t_A$$

and of the second test

$$P^{int}_{mechB} = integral\ (a\ {*}\varepsilon+b)\ d\Theta/t_B$$

the calibration parameters a and b are determined to determine a torque $T = a\ {*}\varepsilon+b$, where T is the torque and $\varepsilon$ is the torque acting on the first shaft section (11).

**Revendications**

1. Procédé de détermination de l'efficacité d'un groupe motopropulseur (1), ou d'une partie d'un groupe motopropulseur, d'une éolienne (4, 7, 11), dans lequel le groupe motopropulseur (1) présente une première extrémité (1a) avec une première section d'arbre (11) pouvant être entraînée au moyen d'un premier dispositif d'entraînement (6) sous la forme d'un moteur électrique, et une seconde extrémité (1b) avec une seconde section d'arbre (27) pouvant être entraînée au moyen d'un second dispositif d'entraînement (7) sous la forme d'un moteur électrique, entre lesquelles est agencé un élément de transmission mécanique, en particulier un engrenage, dans lequel les moteurs électriques peuvent également fonctionner au moins partiellement en mode générateur, dans lequel, lors d'un premier essai, la première extrémité du groupe motopropulseur (1) est entraînée et le couple est immédiatement détecté par un capteur, ainsi qu'une position angulaire ou une vitesse de rotation, au niveau de la première extrémité (1a) du groupe motopropulseur (1) et, au niveau de la seconde extrémité (1b) du groupe motopropulseur (1), le couple est immédiatement détecté par un capteur, ainsi qu'une position angulaire ou une vitesse de rotation, et dans lequel, lors d'un second essai, la deuxième extrémité (1b) du groupe motopropulseur (1) est entraînée et le couple est détecté immédiatement par un capteur, ainsi qu'une position angulaire ou une vitesse de rotation, au niveau de la deuxième extrémité (1b) du groupe motopropulseur (1) et, au niveau de la première extrémité (1a) du groupe motopropulseur (1), le couple est détecté immédiatement par un capteur, ainsi qu'une position angulaire ou une vitesse de rotation, et une efficacité est déterminée à partir des puissances mécaniques déterminées lors du premier essai et lors du second essai en se basant sur les couples et en tenant compte d'au moins une hypothèse prédéterminée en se basant sur des expériences ou la connaissance acquise ou des analyses.

2. Procédé d'étalonnage d'une mesure de couple d'un groupe motopropulseur (1), ou d'une partie d'un groupe motopropulseur, d'une éolienne (4, 7, 11) sur un banc d'essai (6, 14), dans lequel le groupe motopropulseur présente une première extrémité (1a) avec une première section d'arbre (11) pouvant être entraînée au moyen d'un premier dispositif d'entraînement (6) réalisé sous la forme d'un moteur électrique, et une seconde extrémité (1b) avec une seconde section d'arbre (27) pouvant être entraînée au moyen d'un second dispositif d'entraînement (7) réalisé sous la forme d'un moteur électrique, entre lesquelles est agencé un élément de transmission mécanique, en particulier un engrenage (4), dans lequel les moteurs électriques peuvent également fonctionner au moins partiellement en mode générateur, dans lequel, lors d'un premier essai, la première extrémité du groupe motopropulseur est entraînée et le couple est immédiatement détecté par un capteur, ainsi qu'une position angulaire ou une vitesse de rotation, au niveau de la première extrémité (1a) du groupe motopropulseur (1) et, au niveau de la seconde extrémité (1b) du groupe motopropulseur (1), le couple est immédiatement détecté par un capteur, ainsi qu'une position angulaire ou une vitesse de rotation, et dans lequel, lors d'un second essai, la deuxième extrémité du groupe motopropulseur (1) est entraînée et le couple est détecté immédiatement par un capteur, ainsi qu'une position angulaire ou une vitesse de rotation, au niveau de la deuxième extrémité (1b) du groupe motopropulseur (1), et le couple est détecté directement par un capteur, ainsi qu'une position angulaire ou une vitesse de rotation, au niveau de la première extrémité (1a) du groupe motopropulseur (1) et des paramètres d'étalonnage a et b sont déterminés à partir des puissances mécaniques déterminées lors du premier essai et lors du second essai, en tenant compte des vitesses de rotation également détectées, et en tenant compte d'au moins une hypothèse prédéterminée en se basant sur des expériences ou la connaissance acquise ou des analyses, dans lequel les premier et second essais sont mis en œuvre pour au moins deux niveaux de couple différents, dont l'un peut être un niveau de couple nul.

**3.** Procédé selon la revendication 1 ou 2, **caractérisé en ce qu'**une hypothèse permettant de déterminer l'efficacité ou permettant d'étalonner une mesure de couple est l'hypothèse que l'efficacité du premier essai est égal à l'efficacité du second essai.

**4.** Procédé selon la revendication 1 ou 2, **caractérisé en ce qu'**une hypothèse permettant de déterminer l'efficacité ou permettant d'étalonner une mesure de couple est l'hypothèse qu'une perte de puissance de l'un des deux essais est une certaine fraction de la perte de puissance totale des deux essais.

**5.** Procédé selon l'une quelconque des revendications précédentes, **caractérisé en ce que** le couple est mesuré avec une jauge de contrainte et/ou **en ce qu'**une position angulaire $\Theta$ de la section d'arbre ou sa vitesse de rotation $\omega$ est mesurée avec un codeur incrémental.

**6.** Procédé selon l'une quelconque des revendications précédentes, **caractérisé en ce que**, lors du premier et/ou du second essai, côté entraînement et/ou côté sortie, en plus du couple et d'une position angulaire ou d'une vitesse de rotation ß, une puissance électrique de l'unité d'entraînement (6, 7) fonctionnant en tant que moteur ou générateur est mesurée, dans lequel en particulier au moins une tension et au moins une intensité sont mesurés au niveau d'un des entraînements afin de déterminer la puissance électrique.

**7.** Procédé selon l'une quelconque des revendications précédentes, **caractérisé en ce qu'**une perte de puissance d'essai est déterminée pour le premier essai et pour le second essai, ces deux pertes de puissance d'essai déterminées sont additionnées pour former une perte de puissance totale, et l'efficacité est calculé à l'aide de la perte de puissance totale.

**8.** Procédé selon l'une quelconque des revendications précédentes, **caractérisé en ce que**, pour déterminer le couple, le signal de mesure d'un capteur (28, 29), qui est agencé sur la section d'arbre (11, 27) respective ou sur un adaptateur d'arbre (12) entre la section d'arbre respective et une section d'arbre adjacente, est évalué.

**9.** Procédé selon l'une quelconque des revendications précédentes, **caractérisé en ce que**, pendant le premier essai, différents points de fonctionnement du groupe motopropulseur (1) sont abordés et, pendant le second essai, différents points de fonctionnement du groupe motopropulseur (1) sont abordés, dans lequel les points de fonctionnement abordés lors des premier et second essais sont de manière préférée les mêmes.

**10.** Procédé selon l'une quelconque des revendications précédentes, **caractérisé en ce que** lors du second essai, la seconde extrémité (1b) du groupe motopropulseur (1) est entraînée de telle manière que le couple agissant sur la première section d'arbre (11) lors du second essai est identique au couple agissant sur la première section d'arbre (11) lors du premier essai.

**11.** Procédé selon l'une quelconque des revendications 1 à 9, **caractérisé en ce que** lors du second essai, la seconde extrémité (1b) du groupe motopropulseur (1) est entraînée de telle manière que le couple agissant sur la seconde section d'arbre (27) lors du second essai est identique au couple agissant sur la seconde section d'arbre (27) lors du premier essai.

**12.** Procédé selon l'une quelconque des revendications précédentes, **caractérisé en ce que** le sens de rotation des première et deuxième sections d'arbre (11, 27) est le même lors des premier et second essai.

**13.** Procédé selon l'une quelconque des revendications précédentes, dans lequel, à l'aide du couple agissant sur la première section d'arbre (11), une puissance mécanique $P_{mechA}$ et $P_{mechB}$ est déterminée en fonction de deux constantes a et b, respectivement pour le premier essai et pour le second essai, et sur la base de $P_{mech.left.A}$-$P_{mech.right.A}$= k($P_{mech.right.B}$+$P_{mech.left.B}$) et $P_{mech.left.A}$+$k_{Pmech.left.B}$=$k_{Pmech.right.B}$+$P_{mech.right.A}$, dans lequel k est le rapport entre les pertes (sous la forme d'une énergie transférée en tant qu'intégrale) du premier essai

$$P^{int}_{mechA} = \text{intégrale } (a * \varepsilon + b) \, d\Theta / t_A$$

et du second essai

$$P^{int}_{mechB} = \text{intégrale } (a * \varepsilon + b) \, d\Theta / t_B$$

les paramètres d'étalonnage a et b sont déterminés afin de définir un couple T=a *ε+b, dans lequel T est le couple et ε est le couple agissant sur la première section d'arbre (11).

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

$|\Delta P_A| = abs(P_{L.A} - P_{R.A})$

$|\Delta P_B| = abs(P_{R.B} - P_{L.B})$

$P_{L.A} = P_{R.A} + |\Delta P_A|$

$P_{L.B} = P_{R.B} + |\Delta P_B|$

$(P_{L.A} - P_{L.B}) = (P_{R.A} - P_{R.B}) + (|\Delta P_A| - |\Delta P_B|)$

Fig. 17

Fig. 18

Fig. 19

Fig. 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018203525 B3
- DE 102010049407 A1
- US 1662705 A
- CN 206876320 U
- DE 102010047413 A1
- DE 10326212 A1
- DE 102018203525